# EUROPEAN PATENT APPLICATION

(11) **EP 4 559 677 A1**
(43) Date of publication of application: **28.05.2025**
(21) Application number: 23842972.4
(22) Date of filing: 18.07.2023
(51) Int. Cl.: B32B 27/32, B65D 65/40

(54) **LAMINATE FOR PACKAGING, METHOD FOR SELECTING SAME, METHOD FOR EVALUATING SAME, PACKAGING BAG, AND METHOD FOR PRODUCING SAME**

(30) Priority: 21.07.2022 JP 2022116514
(71) Applicant: Toppan Holdings Inc., Tokyo 110-0016 (JP)
(72) Inventor: OGIHARA, Yu, Tokyo 110-0016 (JP)
(74) Representative: Hoffmann Eitle
(86) International application number: PCT/JP2023/026261
(87) International publication number: WO 2024/019049

(57) **Abstract**

A packaging laminate according to an aspect of the present disclosure is a laminate including at least a substrate layer, an intermediate layer, and a sealant layer, in which the substrate layer, the intermediate layer, and the sealant layer each contain polypropylene, the polypropylene accounts for 90% by mass or more of the total of the laminate, and when the laminate is heat-sealed at 170 °C under 1 MPa for 0.3 seconds, the laminate has a 2.5% or less MD thermal shrinkage determined from predetermined equation (1) and a 2.0% or less TD thermal shrinkage determined from predetermined equation (2).

## Description

### [Technical Field]

The present disclosure relates to a packaging laminate, a method for selecting the packaging laminate, a method for evaluating the packaging laminate, a packaging bag, and a method for producing the packaging bag.

### [Background Art]

A known laminate includes a base film that is a biaxially oriented polyethylene terephthalate (PET) film having high heat resistance and toughness and a sealant layer that is a polyolefin film such as polyethylene or polypropylene (for example, see PTL 1).

### [Citation List]

### [Patent Literature]

[PTL 1] JP 2017-178357 A

### [Summary of the Invention]

### [Technical Problem]

As the world's attention is focused on the problem of plastic waste, the demand for eco-friendly packaging materials is growing in order to achieve a recycling-oriented society. For packaging materials, many global corporations have set goals for better plastic resource recycling and announced a variety of measures. As the U.S. has started to develop recycling routes for polyethylene (PE) from collection to reuse, global recycling efforts based on monomaterials (single materials) are accelerating. That is, packaging laminates, which have traditionally been improved by combining various different materials, are also being demanded to be monomaterial structures.

For packaging materials for retorting, when traditional multi-material (composite material) packaging is converted to monomaterial packaging, the multi-material packaging may be changed to a single polypropylene (PP) material in view of sealant characteristics. However, when a packaging material is converted to a monomaterial structure, the innermost layer (the layer facing the contents) and the outermost layer have very close melting points. In particular, for packaging materials for retorting, the melting point of the sealant, which is the innermost layer, needs to be increased to some extent in order to prevent the packaging from opening under retort conditions. For this reason, the melting point difference from the outermost layer narrows further.

The outermost layer is made of a film resistant to thermal fusion because the layer is the part that receives the most heat in a heat-sealing step during bag making. However, when the sealant, which is the innermost layer, is subjected to a high temperature for fusion in the heat-sealing step, the outermost layer may deform due to thermal shrinkage, which may distort the bag and reduce transportability or workability in filling, and other problems may occur.

The present disclosure has been made in view of such circumstances and directed to providing a packaging laminate that is less thermally deformable even when the laminate is based on polypropylene, and providing a method for selecting the packaging laminate and a method for evaluating the packaging laminate. The present disclosure also provides a packaging bag including the packaging laminate and a method for producing the packaging bag.

### [Solution to Problem]

An aspect of the present disclosure is a method for selecting a packaging laminate including at least a substrate layer, an intermediate layer, and a sealant layer, with the substrate layer, the intermediate layer, and the sealant layer each containing polypropylene and with the polypropylene accounting for 90% by mass or more of the total of the laminate, the method comprising: determining a laminate as an acceptable product when the laminate to be evaluated has a 2.5% or less MD thermal shrinkage determined from equation (1) below and a 2.0% or less TD thermal shrinkage determined from equation (2) below after being heat-sealed at 170 °C under 1 MPa for 0.3 seconds.

Another aspect of the present disclosure is a method for producing a packaging bag, the method comprising: fabricating the laminate determined as an acceptable product by the selecting method into a bag.

Still another aspect of the present disclosure is a method for evaluating a packaging laminate including a at least a substrate layer, an intermediate layer, and a sealant layer, with the substrate layer, the intermediate layer, and the sealant layer each containing polypropylene and with the polypropylene accounting for 90% by mass or more of the total of the laminate, the method comprising: preparing a laminate to be evaluated; heat-sealing the laminate; and determining the thermal shrinkage of the heat-sealed part of the laminate.

Still another aspect of the present disclosure is a packaging laminate comprising: at least a substrate layer, an intermediate layer, and a sealant layer, in which the substrate layer, the intermediate layer, and the sealant layer each contains polypropylene,
the polypropylene accounts for 90% by mass or more of the total of the laminate, and when the laminate is heat-sealed at 170 °C under 1 MPa for 0.3 seconds, the laminate has a 2.5% or less MD thermal shrinkage determined from equation (1) below and a 2.0% or less TD thermal shrinkage determined from equation (2) below.

Even when the packaging laminate is a polypropylene-based monomaterial laminate (the polypropylene content of the laminate being 90% by mass or more), the laminate can be less thermally deformable.

For a polypropylene-based monomaterial laminate, OPP (oriented PP), which has low sealability and good transparency, may be used as the substrate layer. However, OPP has a much lower melting point than PET (polyethylene terephthalate) used as substrate layers for multi-material laminates and thermally shrinks easily. On the other hand, the laminate manufacturing process (bonding process) involves many heating steps such as a corona treatment and an oven step. Accordingly, for PP monomaterial laminates, the film may shrink during the manufacturing process and cause misalignment of designs such as patterns or variations in laminate strength. However, the above-described packaging laminate can be less thermally deformable and thus reduce defects such as misalignment of designs such as patterns or variations in laminate strength during the manufacturing process.

The MD (machine direction) refers to the film transport direction of the substrate layer and the sealant layer, and the TD (transverse direction) refers to the direction perpendicular to the MD. For example, a phase difference measurement device (trade name: KOBRA, manufactured by Oji Scientific Instruments Co., Ltd.) is used to measure the orientation angle of a film, and the MD and TD of the film can be discerned by the orientation angle. The direction in which molecular chains are oriented can be determined as the TD. For processing efficiency, it is preferable to align the MD and TD of the substrate layer of the laminate with those of the sealant layer. MD thermal shrinkage (%) = (Length in MD before heating - Length in MD after heating)/Length in MD before heating × 100 TD thermal shrinkage (%) = (Length in TD before heating - Length in TD after heating)/Length in TD before heating × 100

In an aspect, when heat-sealed at 180 °C under 1 MPa for 0.3 seconds, the laminate may have a 4.5% or less MD thermal shrinkage determined from equation (1) and a 3.5% or less TD thermal shrinkage determined from equation (2).

In an aspect, when heat-sealed at 180 °C under 1 MPa for 0.3 seconds, the laminate may have a 3.0% or less MD thermal shrinkage determined from equation (1) and a 2.0% or less TD thermal shrinkage determined from equation (2).

In an aspect, when the laminate is heat-sealed at 160 °C under 1 MPa for 0.3 seconds, the MD thermal shrinkage of the substrate layer determined from equation (1) may be greater than the TD thermal shrinkage of the substrate layer determined from equation (2).

In an aspect, the laminate may further include: an inorganic oxide layer formed on at least one surface of the substrate layer or at least one surface of the intermediate layer; and a gas barrier coating layer formed on the inorganic oxide layer, and the gas barrier coating layer may be formed with a gas barrier coating layer forming composition containing at least one selected from the group consisting of a hydroxyl-containing polymer compound, a metal alkoxide, a silane coupling agent, and hydrolysates thereof.

In an aspect, the laminate may be for a retort pouch.

Still another aspect of the present disclosure is a packaging bag formed by fabricating the packaging laminate into a bag.

### [Advantageous Effects of the Invention]

The present disclosure provides a packaging laminate that is less thermally deformable even when the laminate is based on polypropylene, a method for selecting the packaging laminate, and a method for evaluating the packaging laminate. The present disclosure also provides a packaging bag including the packaging laminate and a method for producing the packaging bag.

### [Brief Description of the Drawings]

[Fig. 1] Fig. 1 is a schematic cross-sectional view illustrating a packaging laminate according to an embodiment.
[Fig. 2] Fig. 2 is a schematic diagram illustrating a method for measuring the thermal shrinkage during oven heating.
[Fig. 3] Figs. 3(a) to 3(c) are longitudinal sectional views of samples taken along lines drawn on the samples and schematic diagrams illustrating the states of the samples after heat sealing.

### [Description of the Embodiments]

Exemplary embodiments of the present disclosure will now be described in detail with reference to the drawings as appropriate. It is noted that like reference numerals designate identical or corresponding components throughout the drawings, and redundant description is omitted. Further, dimensional ratios in the drawings are not limited to those shown in the drawings.

### <Packaging Laminate>

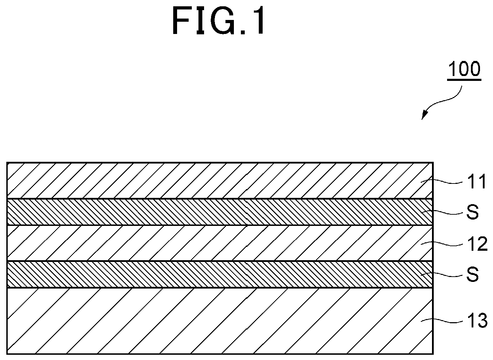

A packaging laminate according to the present embodiment will now be described in detail. Fig. 1 is a schematic cross-sectional view illustrating a packaging laminate according to the present embodiment (hereinafter, also simply referred to as a laminate). Fig. 1 illustrates a laminate 100 including a substrate layer 11, an intermediate layer 12, and a sealant layer 13 in this order. The substrate layer 11 and the intermediate layer 12 may be bonded together by an adhesive layer S, and the intermediate layer 12 and the sealant layer 13 may be bonded together by another adhesive layer S. The substrate layer, the intermediate layer, and the sealant layer each contain polypropylene. The substrate layer, the intermediate layer, and the sealant layer may include a polypropylene film. The laminate may include an inorganic oxide layer so as to improve gas barrier performance against, for example, water vapor and oxygen. The inorganic oxide layer may be provided on at least one surface of the substrate layer or at least one surface of the intermediate layer. The laminate may include a gas barrier coating layer provided on the inorganic oxide layer.

### [Substrate Layer 11]

The substrate layer is a layer that serves as a support and contains polypropylene. The substrate layer may include a polypropylene film or may be formed of a polypropylene film.

The polypropylene film may be, for example, an acid-modified polypropylene film obtained by graft-modifying polypropylene with an unsaturated carboxylic acid, an acid anhydride of an unsaturated carboxylic acid, or an ester of an unsaturated carboxylic acid. Examples of usable polypropylene includepolypropylene resins such as a homopolypropylene resin (PP), a propylene-ethylene random copolymer, a propylene-ethylene block copolymer, and a propylene-α olefin copolymer.

The polypropylene film included in the substrate layer may further contain various additives such as a flame retarder, a slipping agent, an antiblocking agent, an antioxidant, a photostabilizer, a tackifier, and an antistatic agent.

The polypropylene film included in the substrate layer may be a stretched film or a cast film. However, the polypropylene film is preferably a stretched film in view of, for example, impact resistance, heat resistance, water resistance, and dimensional stability. This can reduce the likelihood of thermal fusion of the substrate layer in the heat-sealing step during bag making. In addition, the laminate can be more appropriately used for retort treatment or boiling treatment. The stretching method is not limited to a particular method but may be any method such as inflation stretching, uniaxial stretching, or biaxial stretching as long as dimensionally stable films can be provided.

The polypropylene film included in the substrate layer is, for example, preferably subjected to heat treatment and relaxation treatment after being transversely stretched. Specifically, the film is preferably subjected to heat treatment at a temperature of 140 °C or more and 167 °C or less while being relaxed 3% or more and 15% or less in the width direction with its width ends tensioned with tenter clips. The heat treatment temperature is more preferably 150 °C or more, still more preferably 155 °C or more, and yet still more preferably 160 °C or more. The heat treatment temperature that is higher than or equal to 140 °C or within the above preferable range can improve the structural stability of the polypropylene film against heat. As a result, good dimensional stability can be achieved in the heat-sealing step. The heat treatment temperature is more preferably 166 °C or less and still more preferably 165 °C or less. In the relaxation treatment, so as to enhance the structural stability of the film against heat, the lower limit of the relaxation rate is preferably 3%, more preferably 5%, still more preferably 7%, and yet still more preferably 9%. The upper limit is preferably 20%, more preferably 18%, still more preferably 17%, and yet still more preferably 15%. A relaxation rate that is higher than or equal to 2% can reduce thermal shrinkage during heat sealing. Further, a relaxation rate that is lower than or equal to 20% can reduce any slack in the film inside the tenter, and as a result, the film after formation is less likely to have wrinkles. During printing, patterns are easier to register (images are less likely to be out of register), and during other lamination, the film is easier to bond without generating air bubbles.

The substrate layer is not limited to a particular thickness. Although the thickness may range from 6 to 200 µm depending on the use, the thickness may be 9 to 50 µm, 12 to 38 µm, 15 to 30 µm, 18 to 30 µm, 20 to 30 µm, or 25 to 30 µm to reduce materials for the purpose of reducing environmental burdens and to achieve high heat resistance, impact resistance, and excellent gas barrier performance.

The surface of the substrate layer on which another layer is stacked may be subjected to various pretreatments such as corona treatment, plasma treatment, and flame treatment or covered with a coat layer such as an adhesive enhancement layer without degrading the barrier performance.

### [Adhesive Layer]

When the laminate includes an inorganic oxide layer on the substrate layer, an adhesive layer (anchor coat layer) may be provided on the surface of the substrate layer on which the inorganic oxide layer is stacked. The adhesive layer is provided on the substrate layer and capable of achieving two effects: an improvement in the adhesion performance between the substrate layer and the inorganic oxide layer; and an improvement in the smoothness of the surface of the substrate layer. The improved smoothness facilitates uniform deposition of the inorganic oxide layer without defects, allowing high barrier performance to be exhibited easily. The adhesive layer may be formed with an anchor coat agent.

Examples of anchor coat agents include a polyester polyurethane resin and a polyether polyurethane resin. The anchor coat agent is preferably a polyester polyurethane resin for heat resistance and interlayer adhesion strength.

The thickness of the adhesive layer may be, but is not limited to, preferably within the range of 0.01 to 5 µm, more preferably within the range of 0.03 to 3 µm, and still more preferably within the range of 0.05 to 2 µm. An adhesive layer having a thickness higher than or equal to the lower limit tends to provide more appropriate interlayer adhesion strength, whereas a adhesive layer having a thickness lower than or equal to the upper limit tends to easily exhibit desired gas barrier performance.

The adhesive layer may be applied onto the substrate layer by any known coating method without any particular restriction, such as immersion (dipping); or methods using a spray, a coater, a printer, and a brush. Examples of the types of coaters and printers used for these methods and their coating systems include a gravure coater in a system such as direct gravure, reverse gravure, kiss reverse gravure, or offset gravure, a reverse roll coater, a micro-gravure coater, a chamber doctor coater, an air knife coater, a dip coater, a bar coater, a comma coater, and a die coater.

For the coating amount of the adhesive layer, the mass per m² after the application and drying of the anchor coat agent is preferably 0.01 to 5 g/m² and more preferably 0.03 to 3 g/m². When the mass per m² after the application and drying of the anchor coat agent is higher than or equal to the lower limit, the deposition tends to be sufficient, whereas when the mass is lower than or equal to the upper limit, the solvent is less likely to remain as the solvent is sufficiently and easily dried.

Examples of methods for drying the adhesive layer include, but are not limited to, a method of natural drying, a method of drying in an oven set at a predetermined temperature, and a method using a dryer attached to the above-mentioned coater, such as an arch dryer, a floating dryer, a drum dryer, or an infrared dryer. Furthermore, drying conditions may be selected as appropriate depending on the drying method. For example, for a method of drying in an oven, the layer is preferably dried for about one second to two minutes at temperatures of 60 to 100 °C.

For the adhesive layer, the polyurethane resin may be replaced with a polyvinyl alcohol resin. The polyvinyl alcohol resin may be any one containing a vinyl alcohol unit obtained by saponifying a vinyl ester unit, such as polyvinyl alcohol (PVA) or an ethylene-vinyl alcohol copolymer (EVOH).

Examples of PVA include a resin obtained by homopolymerizing and then saponifying a vinyl ester such as vinyl acetate, vinyl formate, vinyl propionate, vinyl valerate, vinyl caprate, vinyl laurate, vinyl stearate, vinyl pivalate, or vinyl versatate. The PVA may be modified PVA obtained by copolymerization modification or post-modification. The modified PVA may be obtained by, for example, copolymerizing a vinyl ester and an unsaturated monomer copolymerizable with the vinyl ester followed by saponification. Examples of unsaturated monomers copolymerizable with a vinyl ester include: olefins such as ethylene, propylene, isobutylene, α-octene, α-dodecene, and α-octadecene; hydroxyl-containing α-olefins such as 3-buten-1-ol, 4-pentyn-1-ol, and 5-hexen-1-ol; unsaturated acids such as acrylic acid, methacrylic acid, crotonic acid, maleic acid, maleic anhydride, itaconic acid, and undecylenic acid; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid; vinyl compounds such as alkyl vinyl ether, dimethyl allylvinyl ketone, N-vinylpyrrolidone, vinyl chloride, vinyl ethylene carbonate, 2,2-dialkyl-4-vinyl-1,3-dioxolane, glycerin monoallyl ether, and 3,4-diacetoxy-1-butene; vinylidene chloride, 1,4-diacetoxy-2-butene, and vinylene carbonate.

The degree of polymerization of PVA is preferably 300 to 3,000. When the degree of polymerization is smaller than 300, the barrier performance easily decreases. When the degree of polymerization is greater than 3,000, the coating suitability easily decreases because the viscosity is too high. The degree of saponification of PVA is preferably 90 mol% or more, more preferably 95 mol% or more, and still more preferably 99 mol% or more. The degree of saponification of PVA may be 100 mol% or less or 99.9 mol% or less. The degrees of polymerization and saponification of PVA can be measured according to the method described in JIS K 6726 (1994).

EVOH can be typically obtained by saponifying a copolymer of ethylene and a vinyl ester of acid such as vinyl acetate, vinyl formate, vinyl propionate, vinyl valerate, vinyl caprate, vinyl laurate, vinyl stearate, vinyl pivalate, or vinyl versatate.

The degree of polymerization of EVOH is preferably 300 to 3,000. When the degree of polymerization is smaller than 300, the barrier performance easily decreases. When the degree of polymerization is greater than 3,000, the coating suitability easily decreases because the viscosity is too high. The degree of saponification of the vinyl ester component of EVOH is preferably 90 mol% or more, more preferably 95 mol% or more, and still more preferably 99 mol% or more. The degree of saponification of EVOH may be 100 mol% or less or 99.9 mol% or less. The degree of saponification of EVOH can be determined from the peak area of hydrogen atoms in the vinyl ester structure and the peak area of hydrogen atoms in the vinyl alcohol structure as measured by nuclear magnetic resonance (1H-NMR) spectroscopy.

The ethylene unit content of EVOH is 10 mol% or more, more preferably 15 mol% or more, still more preferably 20 mol% or more, and yet still more preferably 25 mol% or more. The ethylene unit content of EVOH is preferably 65 mol% or less, more preferably 55 mol% or less, and still more preferably 50 mol% or less. When the ethylene unit content is 10 mol% or more, good gas barrier performance or dimensional stability can be maintained under high humidity. When the ethylene unit content is 65 mol% or less, the gas barrier performance can be enhanced. The ethylene unit content of EVOH can be determined by NMR spectrometry.

When the polyvinyl alcohol resin is used as the adhesive layer, examples of methods for forming the adhesive layer include application with a polyvinyl alcohol resin solution and multilayer extrusion.

### [Inorganic Oxide Layer]

When the laminate includes an inorganic oxide layer, examples of the inorganic oxide contained in the inorganic oxide layer include aluminum oxide, silicon oxide, magnesium oxide, and tin oxide. For transparency and barrier performance, the inorganic oxide may be selected from the group consisting of aluminum oxide, silicon oxide, and magnesium oxide. The inorganic oxide layer is preferably a layer containing silicon oxide for high tensile stretchability during processing. The use of the inorganic oxide layer can achieve high barrier performance with an ultrathin layer that does not affect the recyclability of the laminate.

The inorganic oxide layer may desirably have an O/Si ratio of 1.7 or greater. When the O/Si ratio is 1.7 or greater, good transparency is easy to achieve due to the reduced percentage of contained metal Si. The O/Si ratio is preferably 2.0 or smaller. When the O/Si ratio is 2.0 or smaller, the crystallinity of SiO can be regulated to prevent the inorganic oxide layer from being too hard, and good tensile resistance is achieved. This can reduce cracking caused in the inorganic oxide layer when the gas barrier coating layer is stacked. Even after the packaging bag is formed, the substrate layer or the intermediate layer may shrink due to the heat during boiling or retort treatment. However, the inorganic oxide layer with an O/Si ratio of 2.0 or smaller can easily conform to the shrinkage and mitigate a reduction in the barrier performance. To achieve these effects more appropriately, the O/Si ratio of the inorganic oxide layer is preferably 1.75 or greater and 1.9 or smaller, and more preferably 1.8 or greater and 1.85 or smaller.

The O/Si ratio of the inorganic oxide layer can be determined by X-ray photoelectron spectroscopy (XPS). For example, the O/Si ratio may be measured by a measurement device that is an X-ray photoelectron spectrometer (manufactured by JEOL Ltd., trade name: JPS-90MXV) using non-monochromatized Mg Kα (1253.6 eV) as an X-ray source with an X-ray output of 100 W (10 kV - 10 mA). In quantitative analysis for determining the O/Si ratio, relative sensitivity factors of 2.28 for O 1s and 0.9 for Si 2p may be used.

The inorganic oxide layer preferably has a film thickness of 10 nm or more and 50 nm or less. A film thickness that is 10 nm or more enables sufficient water vapor barrier performance to be achieved. A film thickness that is 50 nm or less can reduce cracking caused by deformation due to the internal stress of the thin film, thus mitigating a reduction in the water vapor barrier performance. A film thickness that exceeds 50 nm is not preferable from the economic standpoint because costs are likely to increase due to, for example, an increased amount of materials used and a longer time taken for film formation. From the same perspective as described above, the film thickness of the inorganic oxide layer is more preferably 20 nm or more and 40 nm or less.

The inorganic oxide layer may be formed by, for example, vacuum deposition. In the vacuum deposition, physical vapor deposition or chemical vapor deposition can be used. Examples of the physical vapor deposition include, but are not limited to, vacuum evaporation, sputtering, and ion plating. Examples of the chemical vapor deposition include, but are not limited to, heating CVD, plasma CVD, and optical CVD.

In the vacuum deposition, a particularly preferable process is, for example, resistance heating vacuum evaporation, electron beam (EB) heating vacuum evaporation, induction heating vacuum evaporation, sputtering, reactive sputtering, dual magnetron sputtering, or plasma-enhanced chemical vapor deposition (PECVD). In particular, vacuum evaporation is currently the best for productivity. For heating in vacuum evaporation, any one of electron beam heating, resistive heating, and induction heating is preferably used.

### [Gas Barrier Coating Layer]

The laminate may include a gas barrier coating layer on the inorganic oxide layer. The gas barrier coating layer may be a layer formed using a gas barrier coating layer forming composition containing at least one selected from the group consisting of a hydroxyl-containing polymer compound, a metal alkoxide, a silane coupling agent, and hydrolysates thereof.

The gas barrier coating layer is a film layer having gas barrier properties and may be formed using a gas barrier coating layer forming composition (hereinafter also referred to as the coating agent) including, as a base resin, an aqueous solution or a water/alcohol mixed solution containing at least one selected from the group consisting of a hydroxyl-containing polymer compound, a metal alkoxide, a silane coupling agent, and hydrolysates thereof. To maintain the gas barrier performance after a hot-water treatment such as a retort treatment more appropriately, the coating agent preferably contains at least a silane coupling agent or a hydrolysate thereof, more preferably contains at least one selected from the group consisting of a hydroxyl-containing polymer compound, a metal alkoxide, and hydrolysates thereof and a silane coupling agent or a hydrolysate thereof, and still more preferably contains a hydroxyl-containing polymer compound or a hydrolysate thereof, a metal alkoxide or a hydrolysate thereof, and a silane coupling agent or a hydrolysate thereof. The coating agent can be prepared by, for example, dissolving a hydroxyl-containing polymer compound, which is a water-soluble polymer, into an aqueous (water or water/alcohol mixture) solvent and mixing the resultant solution with a metal alkoxide and a silane coupling agent directly or with a substance obtained by subjecting them to processing such as hydrolysis in advance.

Each component contained in the coating agent for forming the gas barrier coating layer will now be described in detail. Examples of hydroxyl-containing polymer compounds usable for the coating agent include polyvinyl alcohol, polyvinyl pyrrolidone, starch, methylcellulose, carboxymethyl cellulose, and sodium alginate. Among others, the use of polyvinyl alcohol (PVA) in the coating agent for the gas barrier coating layer is preferable because it particularly enhances the gas barrier performance.

To achieve good gas barrier performance, the gas barrier coating layer is preferably formed from a composition containing at least one selected from the group consisting of metal alkoxides represented by general formula (I) below and hydrolysates thereof.

M(OR¹)ₘ(R²)ₙ₋ₘ ... (I)

In general formula (I) above, R¹ and R² are each independently a monovalent organic group having 1 to 8 carbon atoms and preferably an alkyl group such as a methyl group or an ethyl group. M represents an n-valent metal atom such as Si, Ti, Al, or Zr. Furthermore, m represents an integer from 1 to n. If more than one R¹ or R² is present, the R¹s or R²s may be the same or different from each other.

Specific examples of metal alkoxides include tetraethoxysilane [Si(OC₂H₅)₄] and aluminum triisopropoxide [Al(O-2'-C₃H₇)₃]. Tetraethoxysilane and aluminum triisopropoxide are preferable because they are relatively stable in aqueous solvent after hydrolysis.

An example silane coupling agent is a compound represented by general formula (II) below.

Si(OR¹¹)ₚ(R¹²)₃₋ₚR¹³ ... (II)

In general formula (II) above, R¹¹ denotes an alkyl group such as a methyl group or an ethyl group, R¹² denotes a monovalent organic group such as an alkyl group, an aralkyl group, an aryl group, an alkenyl group, an alkyl group substituted with an acryloxy group, or an alkyl group substituted with a methacryloxy group, R¹³ denotes a monovalent organic functional group, and p denotes an integer of 1 to 3. If more than one R¹¹ or R¹² is present, the R¹¹s or R¹²s may be the same or different from each other. Examples of monovalent organic functional groups denoted by R¹³ include a monovalent organic functional group containing a glycidyloxy group, an epoxy group, a mercapto group, a hydroxyl group, an amino group, an alkyl group substituted with a halogen atom, or an isocyanate group.

Specific examples of silane coupling agents include vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyldimethoxysilane.

The silane coupling agent may be a multimer obtained by polymerizing a compound represented by general formula (II) above. The multimer is preferably a trimer and more preferably 1,3,5-tris(3-trialkoxysilylalkyl)isocyanurate. This is a condensation polymer of 3-isocyanate alkyl alkoxysilane. It is known that this 1,3,5-tris(3-trialkoxysilylalkyl)isocyanurate has no chemical reactivity in its isocyanate moiety, but the polarity of the isocyanurate ring moiety ensures reactivity. Similarly to 3-isocyanate alkyl alkoxysilane, this condensation polymer is typically added to a substance such as an adhesive and known as an adhesion improving agent. Thus, the addition of 1,3,5-tris(3-trialkoxysilylalkyl)isocyanurate to a hydroxyl-containing polymer compound can improve the water resistance of the gas barrier coating layer by hydrogen bonding. While 3-isocyanate alkyl alkoxysilane has high reactivity and low liquid stability, 1,3,5-tris(3-trialkoxysilylalkyl)isocyanurate can disperse easily in an aqueous solution to maintain stable liquid viscosity although the isocyanurate ring moiety is not water-soluble due to its polarity. The water resistance of 3-isocyanate alkyl alkoxysilane is equal to that of 1,3,5-tris(3-trialkoxysilylalkyl)isocyanurate.

Some 1,3,5-tris(3-trialkoxysilylalkyl)isocyanurate is produced by thermal condensation of 3-isocyanate propylalkoxysilane and may contain the raw material, or 3-isocyanate propylalkoxysilane, but this is not a problem. The multimer is more preferably 1,3,5-tris(3-trialkoxysilylpropyl)isocyanurate and still more preferably 1,3,5-tris(3-trimethoxysilylpropyl)isocyanurate. Because the methoxy group has a high hydrolysis rate and one containing a propyl group is relatively inexpensive, 1,3,5-tris(trimethoxysilylpropyl)isocyanurate is practically advantageous.

The coating agent may also contain an isocyanate compound or a known additive such as a dispersant, a stabilizer, a viscosity modifier, or a colorant, as appropriate without degrading the gas barrier performance.

The gas barrier coating layer preferably has a thickness of 50 to 1,000 nm and more preferably 100 to 500 nm. A gas barrier coating layer having a thickness of 50 nm or more tends to achieve higher gas barrier performance, whereas a gas barrier coating layer having a thickness of 1,000 nm or less tends to maintain sufficient flexibility.

The coating liquid for forming the gas barrier coating layer may be applied by, for example, dipping, roll coating, gravure coating, reverse gravure coating, air knife coating, comma coating, die coating, screen printing, spray coating, or gravure offset printing. The coating formed by applying the coating liquid may be dried by, for example, hot air drying, hot roll drying, high frequency irradiation, infrared irradiation, UV irradiation, or a combination thereof.

The coating may be dried at temperatures of, for example, 50 to 150 °C and preferably 70 to 100 °C. The drying temperature within the above range can further reduce cracking in the inorganic oxide layer or the gas barrier coating layer, thus enabling high barrier performance to be exhibited.

The gas barrier coating layer may be formed with a coating agent containing a polyvinyl alcohol resin and a silane compound. The coating agent may also contain, as appropriate, an acid catalyst, an alkaline catalyst, or a photopolymerization initiator.

The polyvinyl alcohol resin is as described above. Examples of silane compounds include a silane coupling agent, polysilazane, and siloxane, and specific examples include tetramethoxysilane, tetraethoxysilane, glycidoxypropyltrimethoxysilane, acryloxypropyltrimethoxysilane, and hexamethyldisilazane.

### [Intermediate Layer 12]

For the structure of the intermediate layer, the description provided as to the structure of the substrate layer can be referenced as appropriate. The above-described adhesive layer, inorganic oxide layer, and gas barrier coating layer may be provided on at least one surface of the intermediate layer. The laminate including the intermediate layer can reduce deformation in the laminate during bag making compared with a laminate including no intermediate layer.

The thickness of the intermediate layer may be, but is not limited to, equal to the thickness of the substrate layer, and the thickness ratio of these layers (thickness of substrate layer/thickness of intermediate layer) may be 1.00 or greater, greater than 1.00, 1.25 or greater, or 1.50 or greater. The substrate layer is a portion in direct contact or proximity to heat-seal bars during heat sealing and also a particularly heated part of the layers of the laminate, and thus the substrate layer tends to thermally shrink during heat sealing. Accordingly, when the substrate layer is thicker than the intermediate layer, the thermal shrinkage of the substrate layer can be reduced.

### [Printed Layer]

The laminate may include a printed layer. The printed layer may be provided on at least one surface of the substrate layer or at least one surface of the intermediate layer. The printed layer is provided on the laminate at a position visible from outside in order to indicate information about the contents, identify the contents, improve concealability, or enhance the design quality of the packaging bag. Any printing method and printing ink is not limited, and may be appropriately selected from known printing methods and printing inks are selected depending on, for example, the printability of the film, the design quality such as color tone, the adhesion, and the safety as a food container. Examples of usable printing methods include gravure printing, offset printing, gravure offset printing, flexographic printing, and inkjet printing. Among others, gravure printing can preferably be used due to its productivity and high picture resolution.

In order to increase the adhesion of the printed layer, the surface of the layer on which the printed layer is provided may be subjected to various pretreatments such as corona treatment, plasma treatment, and flame treatment or covered with a coat layer such as an adhesive enhancement layer. The surface of the layer on which the printed layer is provided may be the surface of the substrate layer or the intermediate layer or the surface of the gas barrier coating layer.

### [Adhesive Layer S]

The substrate layer and the intermediate layer may be stacked with an adhesive layer in between. The adhesive may be made from materials such as a polyester-isocyanate resin, a urethane resin, and a polyether resin. To use the packaging bag for retorting, a retort-resistant two-component urethane adhesive can be preferably used. For environmental considerations, the adhesive may not contain 3-glycidyloxypropyltrimethoxysilane (GPTMS).

### [Sealant Layer 13]

The sealant layer is a layer that provides heat sealability in the laminate and contains polypropylene. The sealant layer may include a polypropylene film or may be formed of a polypropylene film.

The polypropylene film may be, for example, an acid-modified polypropylene film obtained by graft-modifying polypropylene with an unsaturated carboxylic acid, an acid anhydride of an unsaturated carboxylic acid, or an ester of an unsaturated carboxylic acid. Examples of usable polypropylene include polypropylene resins such as a homopolypropylene resin (PP), a propylene-ethylene random copolymer, a propylene-ethylene block copolymer, and a propylene-α olefin copolymer.

The polypropylene film included in the sealant layer is preferably a cast film to enhance heat sealability.

The polypropylene film included in the sealant layer may further contain various additives such as a flame retarder, a slipping agent, an antiblocking agent, an antioxidant, a photostabilizer, a tackifier, and an antistatic agent.

The thickness of the sealant layer is determined depending on, for example, the mass of the contents and the shape of the packaging bag and may generally be 30 to 150 µm or 50 to 80 µm.

The sealant layer can be formed by any known lamination method such as dry lamination, which bonds a film-shaped sealant layer made of the above-mentioned polypropylene with an adhesive such as a one-component or two-component urethane adhesive, non-solvent dry lamination, which bonds a film-shaped sealant layer with a solvent-free adhesive, or extrusion lamination, which melts and extrudes the above-mentioned polypropylene into a curtain shape and bonds the extrudate.

Among these formation methods, the dry lamination is preferable due to high resistance to a retort treatment, especially a hot-water treatment at 120 °C or more. However, any lamination method may be adopted as long as the packaging bag is used for a treatment at a temperature of 85 °C or less.

### [Polypropylene Content]

The above-described laminate contains polypropylene in an amount of 90% by mass or more of the total of the laminate. Thus, the laminate can be said to be a single material-based (monomaterial) packaging material and has good recyclability. To further improve the recyclability, the polypropylene content of the laminate may be 90% by mass or more and specifically 95% by mass or more based on the total amount of the laminate.

### [Thermal Shrinkage]

When heat-sealed at 170 °C under 1 MPa for 0.3 seconds, the above-described laminate has a 2.5% or less MD thermal shrinkage determined from equation (1) below and a 2.0% or less TD thermal shrinkage determined from equation (2) below. MD thermal shrinkage (%) = (Length in MD before heating - Length in MD after heating)/Length in MD before heating × 100 TD thermal shrinkage (%) = (Length in TD before heating - Length in TD after heating)/Length in TD before heating × 100

Even when the laminate is a polypropylene-based monomaterial laminate (the polypropylene content of the laminate being 90% by mass or more), the laminate with the thermal shrinkages satisfying the above conditions can be less thermally deformable. The thermal shrinkages of the substrate layer, the intermediate layer, and the sealant layer can be adjusted to allow the thermal shrinkages of the laminate to satisfy the above conditions. For example, the stereoregularity or molecular weight of the polypropylene can be adjusted to facilitate an increase in the orientation temperature or the heat-setting temperature. This enables the thermal shrinkage of each layer to be reduced.

When the laminate is heat-sealed at 170 °C under 1 MPa for 0.3 seconds, the MD thermal shrinkage determined from equation (1) above may be 2.4% or less, 2.3% or less, 2.2% or less, 2.1% or less, 2.0% or less, 1.9% or less, 1.8% or less, 1.7% or less, 1.6% or less, 1.5% or less, 1.4% or less, 1.3% or less, or 1.2% or less.

When the laminate is heat-sealed at 170 °C under 1 MPa for 0.3 seconds, the TD thermal shrinkage determined from equation (2) above may be 1.8% or less, 1.6% or less, 1.4% or less, 1.2% or less, 1.0% or less, 0.8% or less, 0.6% or less, 0.4% or less, or 0.2% or less.

To further reduce thermal deformation, when the laminate is heat-sealed at 180 °C under 1 MPa for 0.3 seconds, the MD thermal shrinkage determined from equation (1) above is preferably 4.5% or less, 4.0% or less, or 3.5% or less and more preferably 3.0% or less, 2.5% or less, 2.0% or less, or 1.5% or less.

To further reduce thermal deformation, when the laminate is heat-sealed at 180 °C under 1 MPa for 0.3 seconds, the TD thermal shrinkage determined from equation (2) above is preferably 3.5% or less, 3.0% or less, or 2.5% or less and more preferably 2.0% or less, 1.5% or less, or 1.0% or less.

When the laminate is heat-sealed at 160 °C under 1 MPa for 0.3 seconds, the MD thermal shrinkage of the substrate layer determined from equation (1) above may be 30% or less, 25% or less, or 20% or less.

When the laminate is heat-sealed at 160 °C under 1 MPa for 0.3 seconds, the TD thermal shrinkage of the substrate layer determined from equation (2) above may be 35% or less, 30% or less, 25% or less, 20% or less, or 15% or less.

To further reduce thermal deformation, when the laminate is heat-sealed at 160 °C under 1 MPa for 0.3 seconds, the MD thermal shrinkage of the substrate layer determined from equation (1) above is preferably greater than the TD thermal shrinkage of the substrate layer determined from equation (2) above.

The above-described thermal shrinkages of the laminate and the substrate layer can be determined based on changes in the length in the MD and the length in the TD before and after heating a measurement sample with heat-seal bars at a predetermined temperature under 1 MPa for 0.3 seconds. Specifically, for example, the thermal shrinkages can be measured by the method indicated in Examples.

When the laminate is heated at 150 °C for 15 minutes in an oven, the MD thermal shrinkage of the sealant layer determined from equation (1) above may be 5.00% or less, 4.00% or less, 3.00% or less, 2.00% or less, or 1.50% or less.

When the laminate is heated at 150 °C for 15 minutes in an oven, the TD thermal shrinkage of the sealant layer determined from equation (2) above may be 5.00% or less, 4.00% or less, 3.00% or less, 2.50% or less, or 1.50% or less.

In order to further reduce problems caused by thermal deformation during bag making (such as wrinkles, bulging, or biting in seal areas and misalignment of seal edges), when the laminate is heated at 150 °C for 15 minutes in an oven, the MD thermal shrinkage of the sealant layer determined from equation (1) above is preferably greater than the TD thermal shrinkage of the sealant layer determined from equation (2) above.

When the laminate is heated at 150 °C for 15 minutes in an oven, the MD and TD thermal shrinkages of the intermediate layer determined from equations (1) and (2) above may each be 12.0% or less, 11.0% or less, 10.0% or less, 9.0% or less, 8.0% or less, or 7.0% or less.

The above-described thermal shrinkages of the intermediate layer and the sealant layer can be determined based on changes in the length in the MD and the length in the TD before and after heating a measurement sample in an oven at 150 °C for 15 minutes. Specifically, for example, the thermal shrinkages can be measured by the method indicated in Examples.

The above-described laminate can appropriately be used for a retort pouch because the laminate is based on polypropylene and capable of being subjected to a retort treatment at a high temperature.

### <Packaging Bag>

The packaging bag according to the present embodiment will now be described in detail. The packaging bag is formed by fabricating the above-described laminate into a bag and not limited to a specific shape. For example, the package may be a bag formed by folding one laminate in half so that one part of the sealant layer faces the other and then heat-sealing three sides, a bag formed by stacking two laminates so that the sealant layers face each other and then heat-sealing the four sides, or a self-standing pouch formed by stacking two laminates so that the sealant layers face each other and sealing the laminates with a bottom material sandwiched between them. The packaging bag can contain products as its contents, such as food and pharmaceutical drugs, and undergo heat sterilization such as a retort treatment or a boiling treatment.

The retort treatment is typically a process for pressure sterilizing microorganisms such as mold, yeast, and bacteria in order to preserve the products such as food and pharmaceutical drugs. Typically, a packaging bag containing food or other contents is subjected to a pressure sterilizing treatment at 105 to 140 °C under 0.15 to 0.30 MPa for 10 to 120 minutes. There is steam retort equipment, which uses heated steam, and hot water retort equipment, which uses pressurized, heated water, and they are used as appropriate depending on conditions for sterilizing the contents such as food. The boiling treatment is a moist heat sterilization process to preserve the products such as food and pharmaceutical drugs. Typically, depending on the contents, a packaging bag containing food or other contents is subjected to a moist heat sterilizing treatment at 60 to 100 °C under atmospheric pressure for 10 to 120 minutes. The boiling treatment is usually performed with a hot water bath at 100 °C or less. Boiling methods are divided into a batch process in which packaging bags are immersed in the hot water bath at a fixed temperature for a fixed time and then removed, and a continuous process in which packaging bags are passed through a tunnel-like hot water bath.

In particular, the above-described packaging bag can appropriately be used for a retort treatment at a temperature of 120 °C or more.

Since the packaging bag has less thermal deformation, the packaging bag has high transportability and workability in filling.

### <Method for Selecting Packaging Laminate>

A method for selecting the packaging laminate according to the present embodiment will now be described in detail. When a laminate to be evaluated is heat-sealed at 170 °C under 1 MPa for 0.3 seconds, and then the laminate has a 2.5% or less MD thermal shrinkage determined from equation (1) below and a 2.0% or less TD thermal shrinkage determined from equation (2) below, the selecting method according to the present embodiment determines the laminate as an acceptable product. MD thermal shrinkage (%) = (Length in MD before heating - Length in MD after heating)/Length in MD before heating × 100 TD thermal shrinkage (%) = (Length in TD before heating - Length in TD after heating)/Length in TD before heating × 100

The laminate includes at least a substrate layer, an intermediate layer, and a sealant layer. The substrate layer, the intermediate layer, and the sealant layer each contain polypropylene. The polypropylene accounts for 90% by mass or more of the total of the laminate. For example, the layer structure of the laminate, the included materials, and the thickness of each layer may be the same as those of the laminate according to the above embodiment.

The thermal shrinkage of the laminate can be determined in the same manner as the thermal shrinkage of the laminate according to the above embodiment.

When heat-sealed at 170 °C under 1 MPa for 0.3 seconds, the laminate determined as an acceptable product may have the same MD thermal shrinkage as the MD thermal shrinkage of the laminate according to the above embodiment. When heat-sealed at 170 °C under 1 MPa for 0.3 seconds, the laminate determined as an acceptable product may have the same TD thermal shrinkage as the TD thermal shrinkage of the laminate according to the above embodiment.

When the laminate determined as an acceptable product is heat-sealed at 180 °C under 1 MPa for 0.3 seconds, the MD thermal shrinkage determined from equation (1) above may be the same as the MD thermal shrinkage of the laminate according to the above embodiment. When the laminate determined as an acceptable product is heat-sealed at 180 °C under 1 MPa for 0.3 seconds, the TD thermal shrinkage determined from equation (2) above may be the same as the TD thermal shrinkage of the laminate according to the above embodiment.

When the substrate layer of the laminate determined as an acceptable product is heat-sealed at 160 °C under 1 MPa for 0.3 seconds, the MD thermal shrinkage determined from equation (1) above may be greater than the TD thermal shrinkage determined from equation (2) above.

The above-described thermal shrinkages of the laminate and the substrate layer can be determined in the same manner as the thermal shrinkages of the laminate and the substrate layer according to the above embodiment.

The packaging bag may be the same as the packaging bag according to the above embodiment.

### <Method for Producing Packaging Bag>

A method for producing the packaging bag according to the present embodiment will now be described. The producing method according to the present embodiment includes the step of fabricating the laminate determined as an acceptable product by the selecting method according to the above embodiment into a bag.

### <Method for Evaluating Packaging Laminate>

A method for selecting the packaging laminate according to the present embodiment will now be described in detail. The selecting method according to the present embodiment includes steps (a) to (c) below.

Step (a): preparing a laminate to be evaluated
Step (b): heat-sealing the laminate
Step (c): determining the thermal shrinkage of the heat-sealed part of the laminate

The laminate includes at least a substrate layer, an intermediate layer, and a sealant layer. The substrate layer, the intermediate layer, and the sealant layer each contain polypropylene. The polypropylene accounts for 90% by mass or more of the total of the laminate. For example, the layer structure of the laminate, the included materials, and the thickness of each layer may be the same as those of the laminate according to the above embodiment. The thermal shrinkage of the heat-sealed part of the laminate can be determined in the same manner as the thermal shrinkage of the laminate according to the above embodiment.

### Examples

Although the present disclosure will be described in more detail with reference to the following Examples, the present disclosure is not limited to the Examples.

### <Preparation of Substrate Layer, Intermediate Layer, and Sealant Layer>

Oriented polypropylene (OPP) films, OPP1 to 10, 12, 13, and 15, were prepared as substrate layers. The thermal shrinkages and thicknesses of OPP1 to 10, 12, 13, and 15 are listed in table 1. In Examples 4 and 11 and Comparative Examples 1 and 3, commercially available OPP films with the same model number but different thicknesses were used. Oriented polypropylene (OPP) films (thickness: 20 µm) having the thermal shrinkages listed in table 2 were prepared as intermediate layers. Cast polypropylene (CPP) films (thickness: 60 µm) having the thermal shrinkages listed in table 2 were prepared as sealant layers.

### <Preparation of Adhesive Layer Forming Composition>

Acrylic polyol and tolylene diisocyanate were mixed so that the number of NCO groups in the tolylene diisocyanate was equal to the number of OH groups in the acrylic polyol, and the mixture was diluted with ethyl acetate so that the total solid content (the total amount of the acrylic polyol and the tolylene diisocyanate) accounted for 5% by mass. To the diluted mixed solution, β-(3,4-epoxycyclohexyl)trimethoxysilane was further added in an amount of 5 parts by mass with respect to 100 parts by mass of the total amount of the acrylic polyol and the tolylene diisocyanate, and they were mixed to prepare an adhesive layer forming composition (anchor coat agent).

### <Preparation of Gas Barrier Coating Layer Forming Composition>

Liquids A, B, and C below were mixed at a mass ratio of 65/25/10, respectively, to prepare a gas barrier coating layer forming composition.
Liquid A: a hydrolyzed solution with a solid content of 5% by mass (in terms of SiO₂) obtained by adding 72.1 g of 0.1 N hydrochloric acid to 17.9 g of tetraethoxysilane (Si(OC₂H₅)₄) and 10 g of methanol and stirring the resultant mixture for 30 minutes for hydrolysis.
Liquid B: a water/methanol solution (mass ratio of water:methanol = 95:5) containing 5% by mass of polyvinyl alcohol.
Liquid C: a hydrolyzed solution obtained by diluting 1,3,5-tris(3-trialkoxysilylpropyl)isocyanurate with a mixed solution of water/isopropyl alcohol (mass ratio of water:isopropyl alcohol = 1:1) to a solid content of 5% by mass.

### (Example 1)

The corona-treated surface of the intermediate layer OPPa was coated with the adhesive layer forming composition by gravure roll coating, and the composition was dried and cured at 60 °C to form an adhesive layer made from a polyester polyurethane resin with a coating amount of 0.1 g/m². Next, a vacuum evaporator based on electron beam heating was used to form a transparent inorganic oxide layer (silica-deposited layer) made of silicon oxide with a thickness of 30 nm. As the silica-deposited layer, the types of vapor deposition materials were adjusted to form a deposited layer with an O/Si ratio of 1.8. The O/Si ratio was measured by an X-ray photoelectron spectrometer (manufactured by JEOL Ltd., trade name: JPS-90MXV) using non-monochromatized Mg Kα (1253.6 eV) as an X-ray source with an X-ray output of 100 W (10 kV - 10 mA). In quantitative analysis for determining the O/Si ratio, relative sensitivity factors of 2.28 for O 1s and 0.9 for Si 2p were used.

Next, the inorganic oxide layer was coated with the gas barrier coating layer forming composition by gravure roll coating, and the composition was heated and dried in an oven with a tension of 20 N/m at a drying temperature of 120 °C to form a gas barrier coating layer with a thickness of 0.3 µm. As a result, a gas barrier film having a multilayer structure of the intermediate layer, the adhesive layer, the inorganic oxide layer, and the gas barrier coating layer was obtained.

Next, the gas barrier coating layer of the gas barrier film was laminated with the substrate layer OPP1 by dry lamination with a two-component adhesive (manufactured by Mitsui Chemicals, Inc., trade names: base resin A525/curing agent A52), and the non-corona-treated surface of the intermediate layer was corona-treated and laminated with the sealant layer in the same manner. In this manner, a laminate with a multilayer structure of the substrate layer, the adhesive layer, the gas barrier coating layer, the inorganic oxide layer, the adhesive layer, the intermediate layer, the adhesive layer, and the sealant layer was produced. The resultant laminate had a polypropylene content of 90% by mass or more.

### (Examples 2 to 23 and Comparative Examples 1 to 6)

Laminates were produced in the same manner as in Example 1 except that the films listed in table 1 were used as the substrate layers and the sealant layers.

### <Method for Measuring Thermal Shrinkage>

The thermal shrinkages of the substrate layers listed in table 1, the intermediate layers and the sealant layers listed in table 2, and the laminates obtained in Examples and Comparative Examples were measured in accordance with the following procedure. The measurement results of the thermal shrinkages of the laminates are listed in table 1.

### (Substrate Layer)

(a) A piece measuring 60 mm by 60 mm was cut out of the substrate layer as a sample for evaluation. A single sample of this type was prepared.
(b) A 40 mm straight line parallel to the MD was drawn with a ballpoint pen in the center of the corona-treated surface of the sample.
(c) The sample was heat-sealed along the drawn line by heating with heat-seal bars (width: 10 mm) set at 160 °C under a surface pressure of 1.0 MPa for 0.3 seconds. The heat-seal bars used were upper and lower metal bars, and heat-sealing was performed by bringing the heat-seal bars into contact with the substrate layer. After heat-sealing, the sample was allowed to stand at room temperature (25 °C) for 30 minutes. After being heated, the heat-sealed part was not intentionally weighted or cooled.
(d) The length of the drawn straight line was measured before and after heat sealing, and the heat-seal (HS) shrinkage was determined from equation (1) below. Measurements were taken twice in accordance with the same procedure, and the average value was determined. HS shrinkage (%) = (Length of straight line before HS - Length of straight line after HS)/Length of straight line before HS × 100
(e) For the case in which a straight line was drawn parallel to the TD, the average value of HS shrinkages was determined in the same manner.

### (Laminate)

(a) A piece measuring 60 mm by 60 mm was cut out of the laminate as a sample for evaluation. Two samples of this type were prepared. The two samples were stacked in such a way that the sealant layers were in contact with each other.
(b) A 40 mm straight line parallel to the MD was drawn with a ballpoint pen in the center of the surface of the sealant layer of one sample.
(c) The samples were heat-sealed along the drawn line by heating with heat-seal bars (width: 10 mm) set at 170 °C under a surface pressure of 1.0 MPa for 0.3 seconds. The heat-seal bars used were upper and lower metal bars, and heat-sealing was performed by bringing the heat-seal bars into contact with the substrate layer. After heat-sealing, the samples were allowed to stand at room temperature (25 °C) for 30 minutes. After being heated, the heat-sealed part was not intentionally weighted or cooled.
(d) The average value of the HS shrinkages was determined in the same manner as the method for measuring the thermal shrinkage of the substrate layer.
(e) For the case in which a straight line was drawn parallel to the TD, the average value of HS shrinkages was determined in the same manner.
(f) For the case in which the temperature of the heat-seal bars was set at 180 °C, the average value of HS shrinkages in each of the MD and the TD was determined in the same manner.

### (Sealant Layer and Intermediate Layer)

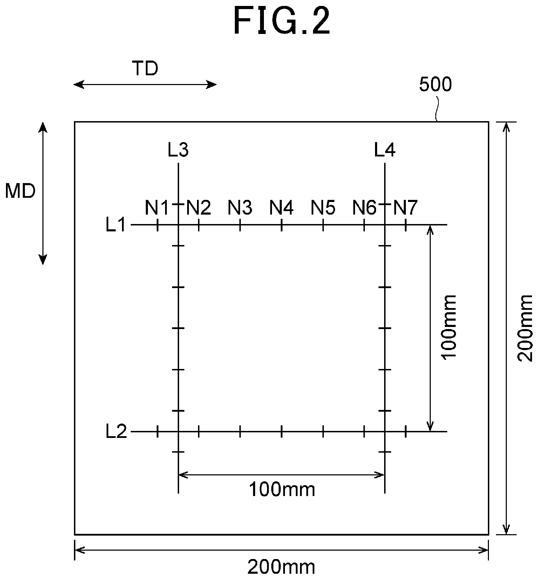

(a) As illustrated in Fig. 2, a piece measuring 200 mm by 200 mm was cut out of the layer or laminate to be measured, as a measurement sample 500.
(b) As illustrated in Fig. 2, two 120 mm or more straight lines L1 and L2 were drawn 100 mm apart parallel to the TD of the measurement sample 500.
(c) As illustrated in Fig. 2, two 120 mm or more straight lines L3 and L4 were drawn 100 mm apart parallel to the MD of the measurement sample 500.
(d) As illustrated in Fig. 2, the straight line L1 was marked with scales N1 to N7 at seven points at intervals of 20 mm. The straight lines L2 to L4 were also marked with scales in the same manner. When the scales were drawn, the scales of the straight lines L1 and L2 were aligned in such a way that the MD was parallel to the imaginary straight lines connecting the scales N1 to N7 of the straight line L1 to the scales N1 to N7 of the straight line L2, respectively. The scales of the straight lines L3 and L4 were also aligned in such a way that the TD was parallel to the imaginary straight lines connecting the scales N1 to N7 of the straight line L3 to the scales N1 to N7 of the straight line L4, respectively.
(e) With a glass plate in an oven heated to 150 °C, the measurement sample 500 on a Teflon (registered trademark) sheet was placed over the glass plate and heated for 15 minutes. After being heated, the measurement sample 500 was taken out from the oven and allowed to stand at room temperature (25 °C) for 30 minutes.
(f) The direct distance between the scale N1 of the straight line L1 (the intersection point between L1 and N1) and the scale N1 of the straight line L2 (the intersection point between L2 and N1) was measured before and after the heating as the length in the MD, and the MD thermal shrinkage was calculated from equation (2) below. Similarly, the MD thermal shrinkage at each position of the scales N1 to N7 was calculated, and the average value of them was determined as the MD thermal shrinkage of the measurement sample 500. MD thermal shrinkage (%) = (Length in MD before heating - Length in MD after heating)/Length in MD before heating × 100
(g) The direct distance between the scale N1 of the straight line L3 (the intersection point between L3 and N1) and the scale N1 of the straight line L4 (the intersection point between L4 and N1) was measured before and after the heating as the length in the TD, and the TD thermal shrinkage was calculated from equation (3) below. Similarly, the TD thermal shrinkage at each position of the scales N1 to N7 was calculated, and the average value of them was determined as the TD thermal shrinkage of the measurement sample 500. TD thermal shrinkage (%) = (Length in TD before heating - Length in TD after heating)/Length in TD before heating × 100

### <Appearance Evaluation of Laminate>

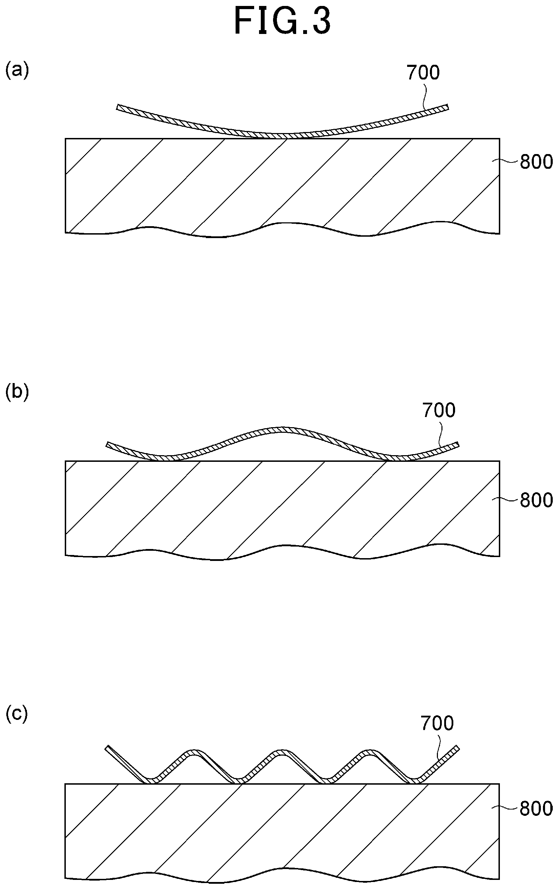

The sample given by the thermal shrinkage measurement method after standing at room temperature (with the heat-seal bars set at a temperature of 170 °C) was evaluated for appearance based on the criteria described below. The results are listed in Table 1. Figs. 3(a) to 3(c) are longitudinal sectional views of samples taken along lines drawn on the samples and schematic diagrams illustrating the states of the samples after heat sealing. The sample illustrated in Fig. 3(a) is evaluated as having substantially no distortion. The sample illustrated in Fig. 3(b) is evaluated as having small distortion. The sample illustrated in Fig. 3(c) is evaluated as having large distortion. A sample 700 is placed on a desk 800.

A: Substantially no distortion found in both the sample on which the straight line was drawn parallel to the MD (hereinafter, also referred to as the MD sample) and the sample on which the straight line was drawn parallel to the TD (hereinafter, also referred to as the TD sample)
B: Small distortion found in both the MD sample and the TD sample
C: Large distortion found in either the MD sample or the TD sample
D: Large distortion found in both the MD sample and the TD sample

**[Table 1]**

| | Layer structure | | | Thermal shrinkage (md, td) [%] | | | Appearance evaluation |
|---|---|---|---|---|---|---|---|
| | Substrate layer | | Sealant layer | Laminate | | Substrate layer | |
| | Type | Thickness [µm] | Type | 170 °c | 180 °c | 160 °c | 170 °c |
| | | | | 1 mpa | 1 mpa | 1 mpa | 1 mpa |
| | | | | 0.3 sec | 0.3 sec | 0.3 sec | 0.3 sec |
| Ex. 1 | Opp1 | 20 | Cppa | (2.4, 2.0) | (4.6, 3.7) | (26.8, 30.5) | c |
| Ex. 2 | Opp2 | 20 | | (2.5, 1.7) | (4.7, 3.2) | (26.4, 31.4) | c |
| Ex. 3 | Opp3 | 20 | | (1.7, 1.2) | (3.9,2.9) | (26.6, 29.1) | B |
| Ex. 4 | Opp4 | 25 | | (2.0, 1.2) | (3.2,2.7) | (25.0, 25.8) | B |
| Ex. 5 | Opp5 | 20 | | (1.5, 1.5) | (3.2, 3.2) | (21.8, 24.6) | B |
| Ex. 6 | Opp6 | 20 | | (1.5, 0.7) | (3.6, 2.0) | (16.1, 18.5) | B |
| Ex. 7 | Opp7 | 20 | | (1.5, 0.7) | (3.4, 2.1) | (20.2, 18.5) | A |
| Ex. 8 | Opp8 | 20 | | (1.9, 1.5) | (3.2,2.7) | (20.3, 18.8) | A |
| Ex. 9 | Opp9 | 25 | | (2.0, 1.2) | (2.7,2.7) | (23.8, 27.7) | B |
| Ex. 10 | Opp10 | 20 | | (1.7, 1.0) | (3.4, 1.9) | (19.7, 16.3) | A |
| Ex. 11 | Opp4 | 30 | | (1.5, 1.0) | (2.5, 1.7) | (22.4, 27.5) | A |
| Ex. 12 | Opp12 | 25 | | (1.7,0.5) | (2.2, 1.2) | (16.9, 16.0) | A |
| Ex. 13 | Opp 13 | 30 | | (1.2, 0.2) | (1.5, 0.7) | (16.0, 13.0) | A |
| Ex. 14 | Opp 13 | 30 | | (1.2, 0.2) | (1.5, 0.7) | (16.0, 13.0) | A |
| Ex. 17 | Opp5 | 20 | Cppb | (2.4, 1.5) | (4.6,2.7) | (21.8, 24.6) | C |
| Ex. 18 | Opp6 | 20 | | (1.9, 1.5) | (2.9, 2.4) | (16.1, 18.5) | B |
| Ex. 19 | Opp7 | 20 | | (2.2, 0.7) | (4.4, 2.4) | (20.2, 18.5) | B |
| Ex. 20 | Opp8 | 20 | | (2.0, 1.2) | (4.1,2.9) | (20.3 18.8) | B |
| Ex. 21 | Opp10 | 20 | | (1.7, 0.7) | (3.4, 2.4) | (19.7, 16.3) | A |
| Ex. 22 | Opp12 | 25 | | (1.5, 0.5) | (2.7, 1.2) | (16.9, 16.0) | A |
| Ex. 23 | Opp 13 | 30 | | (1.2, 0.2) | (1.7, 1.0) | (16.0, 13.0) | A |
| Comp. Exp. 1 | Opp4 | 20 | Cppa | (2.9,2.2) | (4.6, 4.9) | (31.6, 38.2) | D |
| Comp. Exp. 2 | Opp15 | 18 | | (1.9, 2.4) | (4.6, 4.6) | (26.0, 29.8) | D |
| Comp. Exp. 3 | Opp4 | 20 | Cppb | (3.9, 2.4) | (6.6, 7.1) | (31.6, 38.2) | D |
| Comp. Exp. 4 | Opp15 | 18 | | (3.2, 2.0) | (6.3, 5.8) | (26.0, 29.8) | D |
| Comp. Exp. 5 | Opp1 | 20 | | (3.2,2.7) | (6.3, 5.6) | (26.8, 30.5) | D |
| Comp. Exp. 6 | Opp2 | 20 | | (3.0, 3.0) | (5.2, 4.9) | (26.4, 31.4) | D |

**[Table 2]**

| | | Cppa | Cppb | Oppa |
|---|---|---|---|---|
| 150 °c × 15 min | Md | 0.86 | 1.90 | 6.7 |
| Oven thermal shrinkage [%] | Td | 0.44 | 2.05 | 6.1 |

The gist of the present disclosure lies in [1] to [10] below.
[1] A method for selecting a packaging laminate including at least a substrate layer, an intermediate layer, and a sealant layer, with the substrate layer, the intermediate layer, and the sealant layer each containing polypropylene and with the polypropylene accounting for 90% by mass or more of the total of the laminate, the method comprising:
   determining a laminate as an acceptable product when the laminate to be evaluated has a 2.5% or less MD thermal shrinkage determined from equation (1) below and a 2.0% or less TD thermal shrinkage determined from equation (2) below after being heat-sealed at 170 °C under 1 MPa for 0.3 seconds. MD thermal shrinkage (%) = (Length in MD before heating - Length in MD after heating)/Length in MD before heating × 100 TD thermal shrinkage (%) = (Length in TD before heating - Length in TD after heating)/Length in TD before heating × 100
[2] A method for producing a packaging bag, the method comprising:
   fabricating the laminate determined as an acceptable product by the selecting method according to [1] into a bag.
[3] A method for evaluating a packaging laminate including at least a substrate layer, an intermediate layer, and a sealant layer, with the substrate layer, the intermediate layer, and the sealant layer each containing polypropylene and with the polypropylene accounting for 90% by mass or more of the total of the laminate, the method comprising:
   preparing a laminate to be evaluated;
   heat-sealing the laminate; and
   determining the thermal shrinkage of the heat-sealed part of the laminate.
[4] A packaging laminate comprising at least a substrate layer, an intermediate layer, and a sealant layer,
   in which the substrate layer, the intermediate layer, and the sealant layer each contain polypropylene,
   the polypropylene accounts for 90% by mass or more of the total of the laminate, and
   when the laminate is heat-sealed at 170 °C under 1 MPa for 0.3 seconds, the laminate has a 2.5% or less MD thermal shrinkage determined from equation (1) below and a 2.0% or less TD thermal shrinkage determined from equation (2) below. MD thermal shrinkage (%) = (Length in MD before heating - Length in MD after heating)/Length in MD before heating × 100 TD thermal shrinkage (%) = (Length in TD before heating - Length in TD after heating)/Length in TD before heating × 100
[5] The packaging laminate according to [4], in which
   when the laminate is heat-sealed at 180 °C under 1 MPa for 0.3 seconds, the laminate has a 4.5% or less MD thermal shrinkage determined from equation (1) and a 3.5% or less TD thermal shrinkage determined from equation (2).
[6] The packaging laminate according to [4] or [5], in which
   when the laminate is heat-sealed at 180 °C under 1 MPa for 0.3 seconds, the laminate has a 3.0% or less MD thermal shrinkage determined from equation (1) and a 2.0% or less TD thermal shrinkage determined from equation (2).
[7] The packaging laminate according to any one of [4] to [6], in which
   when the laminate is heat-sealed at 160 °C under 1 MPa for 0.3 seconds, the substrate layer has an MD thermal shrinkage determined from equation (1) and a TD thermal shrinkage determined from equation (2), the MD thermal shrinkage being greater than the TD thermal shrinkage.
[8] The packaging laminate according to any one of [4] to [7], in which
   when the sealant layer is heated at 150 °C for 15 minutes, the sealant layer has a 1.50% or less MD thermal shrinkage determined from equation (1) and a 1.5% or less TD thermal shrinkage determined from equation (2).
[9] The packaging laminate according to any one of [4] to [8], in which
   the sealant layer is heated at 150 °C for 15 minutes, the sealant layer has an MD thermal shrinkage determined from equation (1) and a TD thermal shrinkage determined from equation (2), the MD thermal shrinkage being greater than the TD thermal shrinkage.
[10] The packaging laminate according to any one of [4] to [9], further comprising:
   an inorganic oxide layer formed on at least one surface of the substrate layer or at least one surface of the intermediate layer; and
   a gas barrier coating layer formed on the inorganic oxide layer,
   in which the gas barrier coating layer is formed with a gas barrier coating layer forming composition containing at least one selected from the group consisting of a hydroxyl-containing polymer compound, a metal alkoxide, a silane coupling agent, and hydrolysates thereof.
[11] The packaging laminate according to any one of [4] to [10], in which the packaging laminate is for a retort pouch.
[12] A packaging bag formed by fabricating the packaging laminate according to any one of [4] to [11] into a bag.

### [Reference Signs List]

- 11: Substrate layer
- 12: Intermediate layer
- 13: Sealant layer
- 100: Laminate
- 500: Measurement sample
- 700: Sample
- 800: Desk

## Claims

1. A packaging laminate comprising at least:
a substrate layer;
an intermediate layer; and
a sealant layer,
wherein the substrate layer, the intermediate layer, and the sealant layer each contain polypropylene,
the polypropylene accounts for 90% by mass or more of a total of the laminate, and
when the laminate is heat-sealed at 170 °C under 1 MPa for 0.3 seconds, the laminate has a 2.5% or less MD thermal shrinkage determined from equation (1) below and a 2.0% or less TD thermal shrinkage determined from equation (2) below, MD thermal shrinkage (%) = (Length in MD before heating - Length in MD after heating)/Length in MD before heating × 100 TD thermal shrinkage (%) = (Length in TD before heating - Length in TD after heating)/Length in TD before heating × 100

2. The packaging laminate according to claim 1, wherein
when the laminate is heat-sealed at 180 °C under 1 MPa for 0.3 seconds, the laminate has a 4.5% or less MD thermal shrinkage determined from equation (1) and a 3.5% or less TD thermal shrinkage determined from equation (2).

3. The packaging laminate according to claim 1 or 2, wherein
when the laminate is heat-sealed at 180 °C under 1 MPa for 0.3 seconds, the laminate has a 3.0% or less MD thermal shrinkage determined from equation (1) and a 2.0% or less TD thermal shrinkage determined from equation (2).

4. The packaging laminate according to claim 1 or 2, wherein
when the laminate is heat-sealed at 160 °C under 1 MPa for 0.3 seconds, the substrate layer has an MD thermal shrinkage determined from the equation (1) and a TD thermal shrinkage determined from the equation (2), the MD thermal shrinkage being greater than the TD thermal shrinkage.

5. The packaging laminate according to claim 1 or 2, wherein
when the sealant layer is heated at 150 °C for 15 minutes, the sealant layer has a 1.50% or less MD thermal shrinkage determined from equation (1) and a 1.50% or less TD thermal shrinkage determined from equation (2).

6. The packaging laminate according to claim 1 or 2, wherein
when the sealant layer is heated at 150 °C for 15 minutes, the sealant layer has an MD thermal shrinkage determined from equation (1) and a TD thermal shrinkage determined from equation (2), the MD thermal shrinkage being greater than the TD thermal shrinkage.

7. The packaging laminate according to claim 1 or 2, further comprising:
an inorganic oxide layer formed on at least one surface of the substrate layer or at least one surface of the intermediate layer; and
a gas barrier coating layer formed on the inorganic oxide layer,
wherein the gas barrier coating layer is formed with a gas barrier coating layer forming composition containing at least one selected from the group consisting of a hydroxyl-containing polymer compound, a metal alkoxide, a silane coupling agent, and hydrolysates thereof.

8. The packaging laminate according to claim 1 or 2, wherein
the packaging laminate is for a retort pouch.

9. A packaging bag formed by fabricating the packaging laminate according to claim 1 or 2 into a bag.

10. A method for selecting a packaging laminate including at least a substrate layer, an intermediate layer, and a sealant layer, with the substrate layer, the intermediate layer, and the sealant layer each containing polypropylene and with the polypropylene accounting for 90% by mass or more of a total of the laminate, the method comprising:
determining a laminate as an acceptable product when the laminate to be evaluated has a 2.5% or less MD thermal shrinkage determined from equation (1) below and a 2.0% or less TD thermal shrinkage determined from equation (2) below after being heat-sealed at 170 °C under 1 MPa for 0.3 seconds, MD thermal shrinkage (%) = (Length in MD before heating - Length in MD after heating)/Length in MD before heating × 100 TD thermal shrinkage (%) = (Length in TD before heating - Length in TD after heating)/Length in TD before heating × 100

11. A method for producing a packaging bag, the method comprising:
fabricating the laminate determined as an acceptable product by the selecting method according to claim 10 into a bag.

12. A method for evaluating a packaging laminate including at least a substrate layer, an intermediate layer, and a sealant layer, with the substrate layer, the intermediate layer, and the sealant layer each containing polypropylene and with the polypropylene accounting for 90% by mass or more of a total of the laminate, the method comprising:
preparing a laminate to be evaluated;
heat-sealing the laminate; and
determining a thermal shrinkage of a heat-sealed part of the laminate.
